# EUROPEAN PATENT APPLICATION

(11) **EP 3 527 912 A1**
(43) Date of publication of application: **21.08.2019**
(21) Application number: 18425012.4
(22) Date of filing: 20.02.2018
(51) Int. Cl.: F24V 30/00, B65D 81/34, A47J 36/26

(54) **Heater for warm food serving vessels**

(71) Applicant: Patruno, Riccardo, 13836 Cossato Biella (IT)
(72) Inventor: Patruno, Riccardo, 13836 Cossato Biella (IT)
(74) Representative: Colosimo, Aldo

(57) **Abstract**

Device relevant to the food warming field, appropriate to keep the warmth of food products at an appropriate level for human consumption, once they are poured into the serving dishes (9), waiting to be served to the diners.

This is a system to preserve the temperature of the serving dishes (9) that contain food products by means of heat generated by the invention (through the priming of an exothermal chemical reaction activated through the contact with the air of the oversaturate mix of known compounds in given proportions, contained within the heater (1)), which is transferred to the food vessel (9) by contact and thermal conduction.

## Description

### Technical field of application.

Subject invention is specifically related to food warming. In particular, it is a system that allows keeping the warmth, as appropriate to human consumption, of the food once it is poured into the serving dishes, ready to be served to the diners.

It is a system to preserve the temperature of the serving dishes that contain food products, by means of the transfer of heat generated by the invention and conveyed to the vessel by contact.

### Model background and state-of-the-art of the technique

It is known that keeping the warm temperature of food contained in a dish before it is served to the consumers represents a difficulty - for both the restaurateurs and the home service - as related to keeping the temperature as close as possible to the optimum service one, which is defined by either the chef or the household cook.

To date, the edible temperature is maintained using either ceramic or enameled or non-enameled earthenware dishes that - depending upon their shape and on the thickness of the material they are made of - in - keep the originally wished temperature for a limited amount of time, since this depends - on its turn - on the temperature of the environment where the food is served.

Subsequently, some food products - once they are poured into dishes that are previously heated in an oven or on a food warmer - naturally tend to cool down in a time that is generally much faster than the usual time of edibility of the food, letting therefore the cooking product cool down and thus biasing its organoleptic, taste, physico-chemical properties.

It often occurs in restoration - mainly when numerous diners need to be served at the same time, such as in the ceremonies and catering situations - that the dish, which came out of the kitchen at the correct serving temperature, reaches the consumer at a no longer appropriate one because of a series of variables, such as - just as an example and without limitations - the waiting time before the waiter picks up the dish, or - also - the excessive difference in temperature between the room temperature of the kitchen and the one of the restaurant hall and numberless other factors, thus generating the dissatisfaction of the consumer.

As reported hereinafter, several patents related to the sector already exist, and this provides evidence of the need; nevertheless, none of them manages to achieve a system that allows either the restaurateur or the household cook to keep the temperature - even of a single dish - as it was also in outdoor serving conditions (e.g. catering in gardens, remarkable distance between the preparation area and the dining room).

### Patent n. CN 104787487A - Self-heating food packaging container

*The invention relates to a self-heating food packaging container. The self- heating food packaging container is characterized in that the lower portion in a container body is provided with a supporting frame, a food packaging body is located on the supporting frame, the bottom of the supporting frame is provided with a water bag capable of being opened easily, the water bag is connected with a bag opening pull rope, the end of the pull rope is arranged on the upper portion of the container body, the bottom, opposite to the water bag, of the container body is provided with an exothermal agent packaging bag, and the container body is provided with a cover film. The self-heating food packaging container is characterized in that the water bag is opened through the pull rope outside the container body, the exothermal agent packaging bag generates heat after meeting water to heat objects in the food packaging body, the whole heating process is finished in the container body, and the food packaging body is taken out after heating is finished.*

### Patent n. US 6886553B2 - Self-contained personal warming apparatus and method of warming

*A self-contained disposable single-use heat generating apparatus comprising a heat generating pack having a first bag layer defined by a first surface area bonded to a second bag layer defined by a second surface area and creating a pouch therebetween. A heat generating agent is disposed within the pouch and adapted to consume air at a predetermined consumption rate in an exothermic reaction. At least a portion of one of the first surface area and the second surface area comprises an air permeable surface area having a predetermined airflow rate such that the heat generating agent remains substantially evenly distributed within the pouch. A method of providing therapeutic heat is also provided.*

### Patent n. US5611329A - Flameless heater and method of making same

*A flameless heater includes two non-woven polyester sheets which are thermally bonded together to form a number of pockets. Each pocket is filled with a powder mixture of Mg--Fe alloy, NaCl, antifoaming agents, and an inert filler. The outer surfaces of the polyester sheets are preferably treated with a food grade surfactant. The polyester sheets are gas and water permeable over substantially their entire surfaces and the filled pockets define intervening channels where the polyester sheets are bonded. The resulting heater can be made approximately 50% thinner and 50% lighter than a conventional FRH. In use, both the channels and the permeability of the sheets allow water to wet the powder rapidly and initiate the chemical reactions quickly. The byproducts of the chemical reactions cause the pockets to inflate slightly thereby adding sufficient rigidity to the heater to support a food packet. The byproducts of the chemical reactions exit the pockets through the permeable sheets and are directed away from the reaction via the channels. This rapid removal of the by products of the reaction enhances the efficiency of the reactions which allows a smaller, lighter heater to produce the same heat as a larger, heavier heater.*

### Description of the device

The invention is aimed at settling the inconveniences related to the serving of dishes at an appropriate temperature through a heating system of the dish - irrespectively on the latter's being the one of the final consumer or the one to be served to the table by the waiter - by applying at the bottom of the dish a heater that transmits heat to the dish itself by thermal conduction, thanks to the priming of an exothermal chemical reaction activated through the contact with the air of the oversaturated mix of known compounds in given proportions, contained within the heater.

The invention allows - in a fully natural way - keeping the originally wished serving temperature by thermal conduction that - as highlighted in the main claim - increasing the temperature of the dish up to 40° or 50° C, allows keeping the food at the ideal temperature for consumption, until it is served to the diners, even for 20 to 25 minutes, before the heat value of the invention starts decaying.

The permanence time at a given temperature, as appropriate to either service or consumption, can be adjusted through different versions of the invention, which are diversified as related to both the proportion of the different elements the solution consists of - which can therefore be more or less oversaturated - and its geometric size. The solution does not show any counterindication, since it is not harmful if it accidentally contacts anatomic parts, nor it is corrosive for the dishes or other tools it may come into contact to.

The above fosters the warming up of the food products thanks to an extended heat exchange between the dish that contains them and the device which is the subject of this application, thus allowing the transfer of the heat to the either solid or liquid substances contained in the dish itself.

Other forms of development of subject invention are defined in the depended claims.

### The invention operates as follows:

The invention consists of a flexible vessel, formed by various protective layers and containing an oversaturated solution of Sodium Acetate (chemical formula CH3COONa, molecular weight 82.03 g/mole) and distilled water in given percentages, with a specific opening to the outside that - through the use of fabrics developed in known appropriate materials - allows the air coming into contact with the content of the vessel without letting said content come out. Such opening can be sealed by means of a removable tab which - besides allowing the priming of the exhothermal chemical reaction of the oversaturated solution contained in the envelope at the wished time -once the tang it removed, it also allows having the invention adhere to the bottom of the dish to be warned up by means of the adhesive material located on the edges of said opening.

To the purposes of this application, "heater" (1) of serving dishes (9) means a special multilayer sealed envelope of diversified shapes and dimensions to best suit the serving dish you intend to warm up. The most internal layer (3), which is in contact with the oversaturated mix (2), is developed in material breathing on only one side, and it is suitable to keep temperatures up to 80°C; the external layer (4) is developed in PET or similar printable material in order to allow for graphic customizations, if wished. The external layer shows a fenestrated portion (5) where the absence of PET allows the air coming into contact with the mix through the passage ensured by the use of the material the internal envelope consists of, which lets the gas enter but does not let any liquids come out. The edges of the external envelope window (6) are covered in adhesive material which is suitable to be attached to ceramic material or to similar surfaces the serving dishes are made of. Such window is sealed by means of a purposely-allocated removable tab (7), made of the same material as the outside envelope.

As example - but with no limitations - the geometric shapes of the service dish heater (1) the invention can be developed into are: rectangular, square, round, oval or any polygonal shapes.

The invention is now illustrated in an example of development, without limitations, with reference to a vessel to warm up a serving dish for the consumption of either warm or cold food, at the wished serving temperature, for an appropriate period of time.

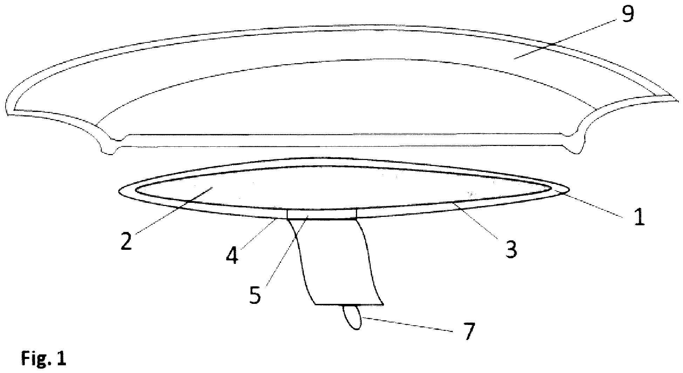

**Figure 1** shows a perspective view with cross-section of the different parts the heater (1) for dish (9) consists of: the chemical solution (2), the external coating (4), the removable tang for the priming of the chemical reaction (7), the internal coating (3) in fabric drilled with holes to allow for the aeration of the chemical compound used for the priming as well as the surfaces of the edges (6) of the window (5) used for the application of the adhesive material for the attachment of the dish or of any other object to be warmed up .

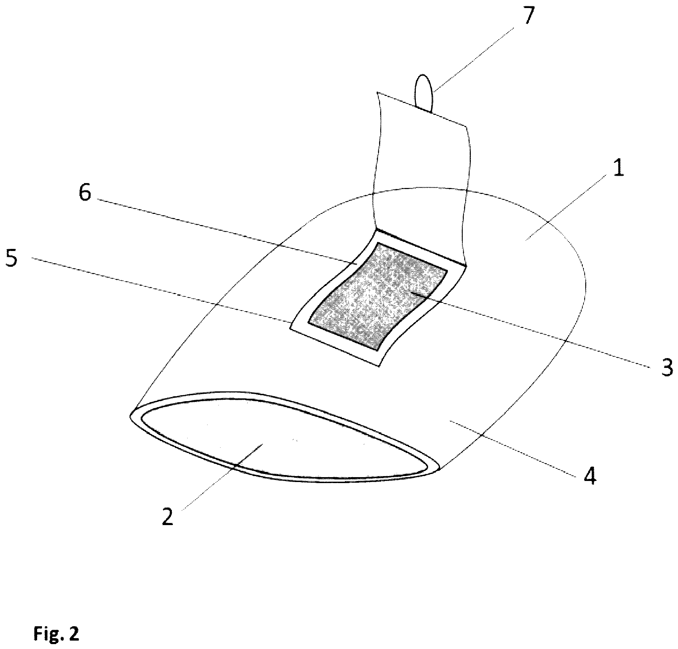

**Figure 2** shows a vertical section of the development example of the invention.

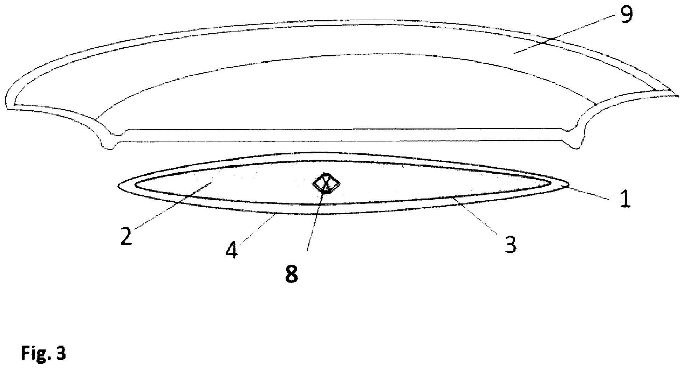

Further developments of the invention are illustrated in **Figure 3**. In this specific case, the development does not show the aeration window, since the exothermal chemical reaction is ensured by the presence of a specific mechanical part (8) fitted together with the saturated salt solution in the internal envelope. In this case, to prime the chemical reaction you will have to press the mechanical part - which is detectable by tact - to let the solution precipitate and trigger the exothermal chemical reaction.

The use of such mechanical part to prime the chemical reaction also allows developing the heater in a reusable, rather than disposable, mode. The heater can be developed in washable external fabric and reused by immersing it into boiling water and then letting it cool down. Through this procedure, the salt solution, which had previously passed from the liquid state to the solid one because of the exothermal reaction, will return to the liquid state, and thus the heater will be reusable.

Likewise, the invention (1) can be used to keep warm any surface that needs to keep its specific temperature when exposed to the air for long periods of time.

## Claims

1. Heater of serving dishes consisting of different layers of material, containing a saturated salt solution in variable concentration, but in specific proportions, which - upon removal of the specific coverage - allows the air coming into contact with the solution, thus priming the exothermal chemical reaction; all this in order to keep warm the liquid or solid food located inside a common serving dish at the wished serving temperature for an extended period of time.

2. Heater in compliance with claim 1 with priming of the exothermal chemical reaction ensured through the use of the metal mechanical part fitted in the internal envelope that contains the saturated mix.

3. Heater in compliance with claims 1 - 2, in shaped waterproof textile material to make it reusable.
